**Europäisches Patentamt**

**European Patent Office**

**Office européen des brevets**

(19)

(11) Veröffentlichungsnummer : **0 403 892 B1**

## (12)    EUROPÄISCHE PATENTSCHRIFT

(45) Veröffentlichungstag der Patentschrift :
**11.08.93 Patentblatt 93/32**

(51) Int. Cl.⁵ : **G01D 5/26**

(21) Anmeldenummer : **90110861.3**

(22) Anmeldetag : **08.06.90**

(54) **Verfahren zur Messung einer physikalischen Grösse mit einem faseroptischen Sensor.**

(30) Priorität : **19.06.89 DE 3919868**
**22.12.89 DE 3942548**
**25.04.90 DE 4013125**

(43) Veröffentlichungstag der Anmeldung :
**27.12.90 Patentblatt 90/52**

(45) Bekanntmachung des Hinweises auf die
Patenterteilung :
**11.08.93 Patentblatt 93/32**

(84) Benannte Vertragsstaaten :
**DE ES FR GB IT NL SE**

(56) Entgegenhaltungen :
**EP-A- 0 175 358**
**DE-A- 3 320 894**

(56) Entgegenhaltungen :
**GB-A- 2 139 346**
**PATENT ABSTRACTS OF JAPAN, Band 6, Nr.**
**198 (P-147)[1076], 7. Oktober 1982; & JP-A-57**
**108 710**

(73) Patentinhaber : **Iveco Magirus**
**Aktiengesellschaft**
**Schillerstrasse 2 Postfach 27 40**
**W-7900 Ulm/Donau (DE)**

(72) Erfinder : **Wiesmeier, Albert, Dr. Dipl.-Phys.**
**Meisenweg 1**
**W-7901 Merklingen (DE)**

(74) Vertreter : **Hanke, Hilmar et al**
**Patentanwälte, Dipl.-Ing. Hans Köster**
**Dipl.-Ing., Dipl. Wirtsch, Hilmar Hanke**
**Leopoldstrasse 77**
**W-8000 München 40 (DE)**

EP 0 403 892 B1

**Beschreibung**

Die Erfindung betrifft ein Verfahren zur Messung einer physikalischen Größe mit einem faseroptischen Sensor gemäß Oberbegriff des Anspruchs 1.

Ein (z.B. aus DE-A-33 20 894, EP-A-0 175 358 oder GB-A-2 139 346) bekanntes Verfahren zur Messung einer physikalischen Größe mit einem faseroptischen Sensor sieht vor, Licht in zwei faseroptischen Sensorzuleitungen bidirektional zu führen, wobei die Sensorzuleitungen abwechselnd als Sende- und Empfangsfaser betrieben werden. Hierbei wird ein Teil des Nutzlichtstroms oder des Referenzlichtstroms am Sensor oder in dessen unmittelbarer Nähe reflektiert. Da beide faseroptischen Sensorzuleitungen abwechselnd als Sende- und Empfangsfaser dienen, sind sie dementsprechend sowohl mit einem Sender als auch mit einem Empfänger ausgestattet. Derartige Elemente werden für bidirektionale faseroptische Kommunikationssysteme benötigt und sind im Handel erhältlich.

Sender und Empfänger sind für beide Zuleitungen vorzugsweise identisch ausgebildet und unterliegen keinen Einschränkungen in spektraler Hinsicht.

Grundsätzlich ist es bei der bekannten bidirektionalen Lichtführung nachteilig, daß ein definierter Teil des Lichtes in die Sendefaser zurückreflektiert wird. Es entstehen parasitäre Reflexionen, welche letztendlich das Meßverfahren beeinträchtigen, d.h. zu Meßungenauigkeiten führen, es sei denn, daß durch besondere Vorkehrungen dafür Sorge getroffen wird, daß die parasitären Reflexionen entfallen.

Aufgabe der Erfindung ist die Verbesserung des vorgenannten Stands der Technik durch Schaffung eines Verfahrens zur Messung einer physikalischen Größe mit einem faseroptischen Sensor mit Hilfe einfacher Mittel, dessen Signal von Störeinflüssen der faseroptischen Zuleitungen unabhängig von Temperatur- und Alterungseffekten getrennt werden kann und insbesondere parasitäre Reflexionen verhindert.

Gelöst wird die der Erfindung zugrundeliegende Aufgabe durch die im Anspruch 1 angegebenen Merkmale.

Vorteilhafte Weiterbildungen ergeben sich aus den abhängigen Ansprüchen 2 bis 8.

Durch die Erfindung entfällt mithin die Notwendigkeit der Reflexion eines definierten Teils des Lichts in die Sendefaser wie bei der bidirektionalen Lichtführung, so daß keine parasitären Reflexionen gegeben sind. Mithin ist die Meßgenauigkeit des Verfahrens von Haus aus groß ohne Verwendung zusätzlicher Mittel.

Zwar ist aus JP-A-57 108 710 ein Verfahren zur Messung einer physikalischen Größe mit Hilfe eines Sensors bekannt. Der spezielle bekannte Sensor ist jedoch nicht für das Referenzverfahren vorgesehen, sondern verwendet die Verschiebung der Resonanzwellenlänge in einem sog. Fabry-Perot-Element, welches gegenüber Temperaturveränderungen hochempfindlich ist und einer großen Genauigkeit bedarf. Das bekannte Meßverfahren ist nur vereinzelt anwendbar. Es verwendet einen Teilerspiegel, der nicht eine faseroptische Weiche im Sinne der vorliegenden Erfindung ist. Auch ist keine bidirektionale Lichtführung vorgesehen.

Auch das aus der GB-A-2 139 346 bekannte Verfahren zur Messung einer physikalischen Größe ist mit demjenigen nach der Erfindung nicht vergleichbar, da bekanntermaßen allenfalls Teillichtmengen wechselnd in die jeweilige Sende- und Empfangsfaser geleitet werden. Im Gegensatz hierzu wird erfindungsgemäß gezielt der gesamte Lichtstrom abhängig von der Ausbreitungsrichtung entweder in den Sensorzweig oder in den Referenzzweig geleitet.

Weitere Einzelheiten und Vorteile werden nachfolgend unter Bezugnahme auf die beigefügte schematische Zeichnung näher erläutert: es zeigen:

Fig. 1     in schematischer Form die Lichtstromführung gemäß einer erfindungsgemäßen Ausführungsvariante 2 im Vergleich zu einer bekannten bidirektionalen Lichtführung (Variante 1),

Fig. 2     eine Anordnung zur Messung einer physikalischen Größe mit einem einfachen faseroptischen Sensor unter Verwendung eines polarisierenden Strahlteilers (Variante 1),

Fig. 3     eine Anordnung ähnlich Fig. 1 unter Verwendung eines teilweise reflektierenden Strahlteilers (Variante 1),

Fig. 4     eine Anordnung ähnlich den vorgenannten Ausführungsformen mit einer rein räumlichen Aufteilung zwischen Referenz- und Nutzlichtstrom im aufgeweiteten Strahlengang (Variante 1),

Fig. 5     ein anderes Ausführungsbeispiel mit variabler Aufteilung zwischen Referenz- und Nutzlichtstrom durch einen Sensor in Form eines reflektierenden Schiebers (Variante 1),

Fig. 6     ein Ausführungsbeispiel mit - je nach Fortpflanzungsrichtung unterschiedlicher Transmission für den Referenz- und Nutzlichtstrom (Variante 2),

Fig. 7     ein Ausführungsbeispiel mit - je nach Fortpflanzungsrichtung - unterschiedlicher Lichtwegführung für den Referenz- und Nutzlichtstrom (Variante 2),

Fig. 8     ein Ausführungsbeispiel des Lichtsende- und Empfangsteils unter Verwendung von Laserdioden, wobei das Prinzip der unterschiedlichen numerischen Apertur ausgenützt wird, und

Fig. 9     ein Ausführungsbeispiel für eine Drehzelle mit Faraday-Effekt.

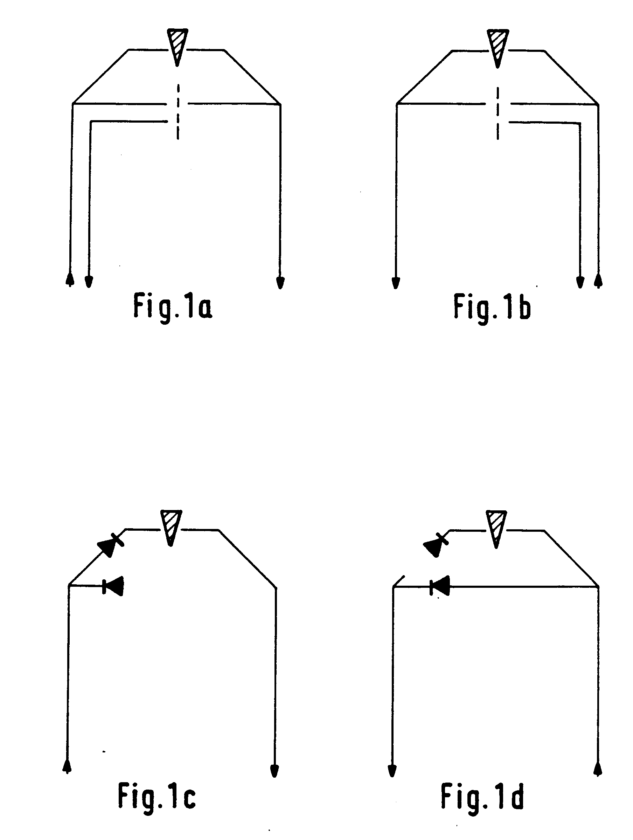

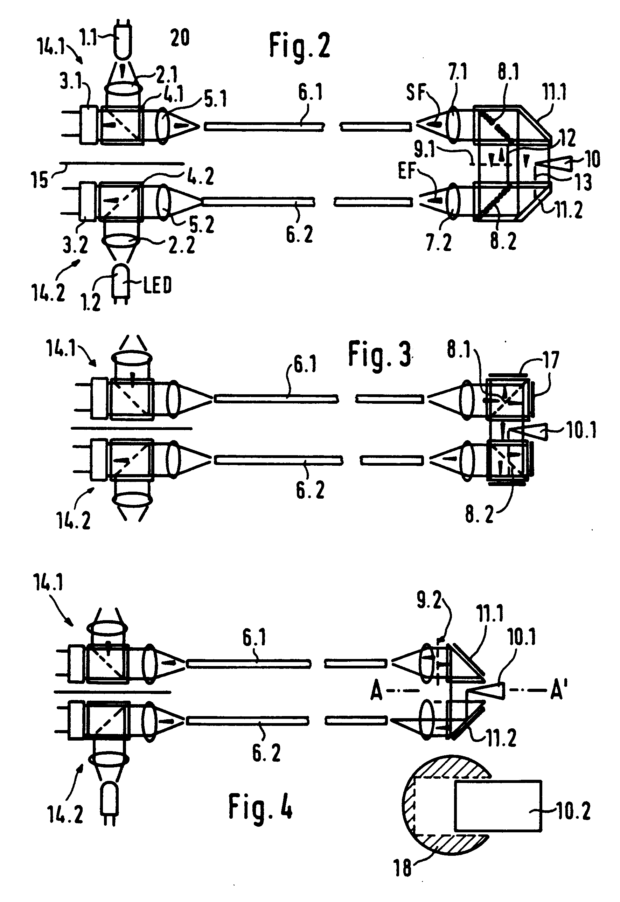

In Fig. 1 sind in schematischer Darstellung die Lichtstromführung zweier Ausführungsbeispiele gezeigt. Das eine Ausführungsbeispiel (Variante 1) gemäß Fig.1a (Phase 1) und gemäß Fig.1b (Phase 2) kennzeichnet sich dadurch, daß ein Teil des Nutzlichtstroms oder des Referenzlichtstroms am Sensor oder in dessen unmittelbarer Nähe reflektiert wird. Variante 1 wird im einzelnen nachfolgend anhand der Fig.2 bis 5 näher beschrieben.

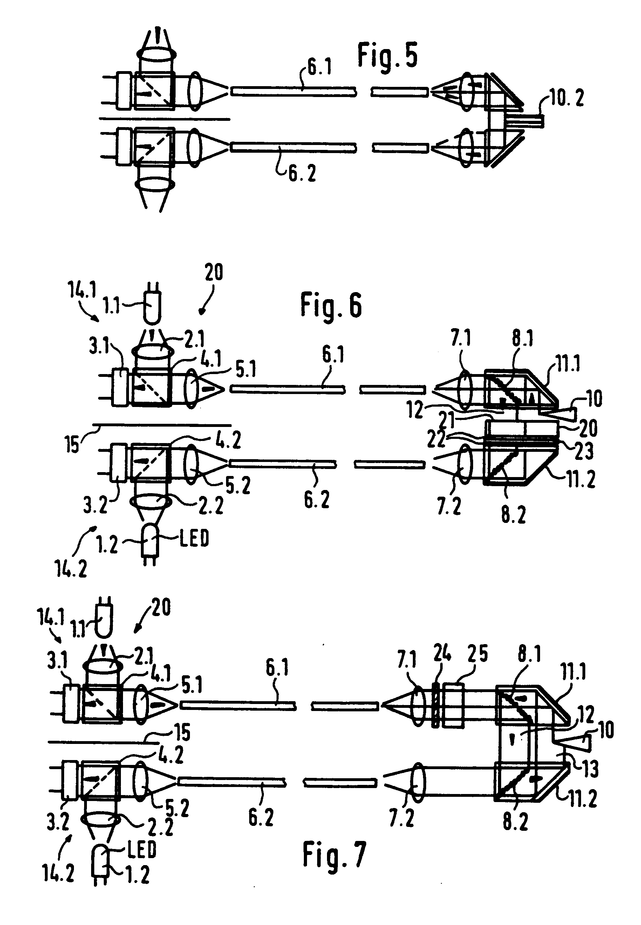

Das andere Ausführungsbeispiel (Variante 2) gemäß den Fig.1c (Phase 1) und gemäß Fig.1d (Phase 2) kennzeichnet sich dadurch, daß mit Hilfe eines Lichtventils bzw. einer Lichtweiche der Lichtstrom in der einen Richtung über den Sensor, in der anderen Richtung an den Sensor vorbeigelenkt wird, mithin eine richtungsabhängige Transmission von Nutz-und Referenzlichtstrom erfolgt. Letztgenannte Variante 2 wird nachfolgend insbesondere anhand der Fig. 6 und 7 näher erläutert.

Die Anordnung gemäß Fig. 2 besteht aus je einem Lichtsende-und Empfangsteil (14.1, 14.2), voneinander getrennt durch eine Blende (15), je eine faseroptische Zuleitung (6.1, 6.2) in Form von Lichtleitfasern, je einer Vorrichtung (8.1, 8.2) für das Aus- bzw. Einkoppeln des Referenzlichtstroms (12), sowie einem leistungsmodulierenden faseroptischen Sensor (10), der den Nutzlichtstrom (13) in eindeutiger Weise als Funktion der physikalischen Größe moduliert. Der Sensor (10) ist hier beispielhaft als absorbierender Schieber (10.1) gezeigt.

Für die Aufteilung des Lichts in einen Nutzlichtstrom (13) und einen Referenzlichtstrom (12) und für die teilweise Rückführung des Referenzlichtstroms (12) sind an sich unterschiedliche technische Ausführungen denkbar. Ein symmetrischer Aufbau bezüglich der beiden faseroptischen Zuleitungen (6.1, 6.2) ist nicht erforderlich, ermöglicht jedoch in der Regel eine einfachere Fertigung und Verdopplung der Stückzahlen der Einzelkomponenten.

Insbesondere sind die Sender (1.1, 1.2) abwechselnd aktiviert, während beide Empfänger (3.1, 3.2) in Betrieb sind, wenn einer der Sender sendet.

Über die - wiederum beispielhaft gezeichneten - Linsen (2.1, 2.2), Strahlvereiniger (4.1, 4.2) und Linsen (5.1, 5.2) wird das Licht in die faseroptischen Zuleitungen (6.1, 6.2) eingekoppelt. Der Lichtstrom am Ende der Faser wird mit Hilfe der Auskopplungsvorrichtung (8.1, 8.2) in Form von ersten polarisierenden Teilern aufgeteilt in einen Referenzlichtstrom (12) und einen Nutzlichtstrom (13) und jeweils wieder vereinigt.

Die Umlenkspiegel (11.1, 11.2) sind ebenfalls als zweite polarisierende "Teiler" ausgestaltet, um den Polarisationsgrad zu erhalten. Da die Orientierung der Umlenkspiegel (11.1, 11.2) orthogonal zu derjenigen der ersten polarisierenden Teiler ist, wirken sie wie gewöhnliche Metallspiegel, bei denen jedoch die Polarisation gestört würde. Das Wiedervereinigen von Referenz- und Nutzlichtstrom geschähe dann nicht mehr erlustfrei bzw. verlustarm.

Ein Teil des Referenzlichtstroms (12) wird am teildurchlässigen Spiegel (9.1) reflektiert und läuft den identischen Weg rückwärts, bis ein Teil davon über die Strahlteiler (4.1, 4.2) auf den Empfänger (3.1, 3.2) trifft, der dem jeweils aktivierten Sender benachbart ist.

Der übrige nichtreflektierte Teil des Referenzlichtstroms (12) durchläuft den gleichen Weg wie der Signallichtstrom, der in den Strahlteilern (8.1, 8.2) wieder eingekoppelt wird.

Fig. 3 zeigt ein anderes Ausführungsbeispiel des Sensorkopfs. Die Strahlteiler (8.1, 8.2) sind als gewöhnliche leistungsteilende Teiler ausgebildet, wobei die außenliegenden und die den Fasern gegenüberliegenden Flächen (17) verspiegelt sind.

Beträgt das Teilungsverhältnis der Teiler (8.1, 8.2) 1:1, so werden die Lichtströme folgendermaßen aufgeteilt:

$$SF \;=\; 1/2 \;+\; 1/6 \,.\, V$$
$$EF \;=\; 1/3 \,.\, V$$

[SF = in die Sendefaser zurückreflektierter Lichtstrom]

[EF = in die Empfangsfaser transmittierter Lichtstrom]

Verluste bei Reflexion und Strahlteilung sind hierbei vernachlässigt. V = Transmission des Sensors (10).

Fig. 4 zeigt eine einfache weitere Ausgestaltung des erfindungsgemäßen Betriebs. Die Aufteilung zwischen Referenz- und Nutzlichtstrom geschieht rein räumlich im aufgeweiteten Strahlengang. Wie die vergrößerte Detailzeichnung entlang der Linie AA zeigt, wird dies einfach dadurch bewirkt, daß der faseroptische Sensor in Form eines Schiebers (10.2) den kreisförmigen Querschnitt (18) des gesamten Lichtstroms auch im ganz eingeschobenen Zustand nicht völlig abdeckt.

Da es aufwendig wäre, einen teildurchlässigen Spiegel so zu gestalten, daß er genau die vom Schieber (10.2) nicht abgedeckten Flächen erfaßt, wird der Spiegel (9.2) gemäß Fig.3 in den Strahlengang zwischen der Linse (7.1) und dem Umlenkspiegel (11.1) plaziert, wobei auch eine andere Anordnung denkbar ist. Bei der Anordnung gemäß Fig.3 ist die Symmetrie nicht mehr gewahrt, und es ergeben sich folgende Lichtströme auf der Sensorseite der faseroptischen Zuleitungen (6.1, 6.2):

Sender 1.1 aktiviert:

$$SF \;=\; 0{,}5; \; EF \;=\; 0{,}5 \,.\, R \;+\; 0{,}5 \,.\, N \,.\, V$$

Sender 1.2 aktiviert:

SF = 0,5 R + 0,5 N V; EF = 0,5 R + 0,5 N V

R = Flächenanteil des Referenzlichtstroms

N = Flächenanteil des Nutzlichtstroms

V = Variable Transmission des Sensors.

In Fig. 5 ist der rein absorbierende Schieber (10.1) des Ausführungsbeispiels der Fig. 2 durch einen reflektierenden ersetzt. Dies vereinfacht den Gesamtsensor und verhindert Lichtverluste, bedeutet zugleich aber eine Einschränkung der Sensorprinzipien. Der rein absorbierende Schieber steht dabei beispielhaft für alle leistungsmodulierenden Sensoren, während der reflektierende Schieber (10.2) gemäß den Fig. 4 und 5 diejenigen Sensoren (10) repräsentiert, bei denen die physikalische Größe in eine Verteilung zweier Lichtströme umgesetzt wird.

Für die Lichtströme auf der Sensorseite der faseroptischen Zuführungen (6.1, 6.2) gilt:

Sender (1.1) bzw. Sender (1.2) aktiviert:

SF = (1 - V); EF = V

Die Notwendigkeit der Reflexion eines definierten Teils des Lichts in die Sendefaser zurück entfällt, wenn eine optische Weiche dafür sorgt, daß das in einer Richtung in die Faserstrecke eingespeiste Licht in einen anderen Zweig des Sensorsystems geleitet wird als dasjenige Licht, welches die Faserstrecke in entgegengesetzter Richtung durchläuft. Mit dieser "Einbahnregelung" ist es möglich, das Licht auf dem Hinweg durch das Sensorelement (10) - Nutzlichtstrom (13) - und auf dem Rückweg am Sensorelement vorbei - Referenzlichtstrom (12) - zu leiten.

Wegen der Umkehrbarkeit der Lichtwege ist die Dämpfung in Fasern, Steckern und anderen optischen Elementen (außer den im folgenden noch zu beschreibenden optischen Isolatoren) für den transmittierten Strahl unabhängig von der Laufrichtung des Lichts. Die Dämpfung auf den faseroptischen Zuleitungen ist daher für den Nutzlichtstrom (Vorwärtsrichtung) dieselbe wie für den Referenzlichtstrom (Gegenrichtung), und der Referenzlichtstrom kann unmittelbar als Maß für die zeitlich veränderliche, unbekannte Streckendämpfung verwendet werden.

Besonders vorteilhaft ist die Kombination der Drehzelle mit polarisierenden Strahlteilern, weil diese die Funktion des Strahlteilens bzw. -wiedervereinigens mit dem Erzeugen polarisierten Lichts verbinden. Fig. 6 zeigt daher eine Konfiguration, die sich am ersten Ausführungsbeispiel von Variante 1 (Fig.2) orientiert. Dabei ist wegen der im Interesse der Anschaulichkeit vorgenommenen Schematisierung auf maßstäbliche Darstellung verzichtet worden. Insbesondere ist die Aufweitung des Strahlengangs übertrieben gezeichnet.

Geht man davon aus, daß der polarisierende Strahlteiler (8.1) Licht mit Polarisation in der Zeichenebene passieren läßt und Licht mit der dazu senkrechten Polarisationsebene reflektiert, so trifft der Referenzlichtstrom (12) unmittelbar auf die Drehzelle (20), die eine Drehung um + $\pi/4$ erzeugt. Daran anschließend passiert es ein Element, z.B. eine Schadt-Helfrich-Zelle mit Flüssigkristallen, die eine Rückdrehung um - $\pi/4$ bewirkt. Die Polarisationsrichtung stimmt daher wieder mit der Orientierung des polarisierenden Strahlteilers (8.2) überein, so daß dort eine Reflexion des Referenzlichtstroms auf die Linse (7.2) erfolgt.

Im Gegensatz dazu gelangt kein Licht von der Sende- und Empfangseinheit (14.1) über das Sensorelement (10) auf die Empfangseinheit (14.2) ("Nutzlichtstrom"), denn die Schadt-Helfrich-Zelle (23) ist im Gegensatz zu derjenigen Zelle (22) im Referenzlichtstrom so gestaltet, daß sie für diese Fortpflanzungsrichtung des Lichts eine weitere Drehung der Polarisationsebene um + $\pi/4$ bewirkt.

Diese addiert sich zu der Drehung in der Drehzelle (20) zu einer Gesamtdrehung von $\pi/2$.

Der Teil des Lichtes, der in der Zeichenebene polarisiert ist, passiert daher den Strahlteiler (8.1), wird am reflektierenden Element (11.1) umgelenkt, im Sensorelement (10) moduliert, in der Drehzelle (20) und der Schadt-Helfrich-Zelle (23) um insgesamt $\pi/2$ in seiner Polarisationsebene gedreht und entweder im Element (11.2), falls dessen Umlenkspiegel polarisierend gestaltet ist, oder spätestens im polarisierenden Strahlteiler (8.2) absorbiert, weil die Polarisationsebene nicht mehr zur Orientierung dieser Elemente "paßt".

Im folgenden wird die Lichtfortpflanzung für die Phase 2 untersucht, d.h. der Phase, in der Sender (1.2) und Empfänger (3.1) aktiv sind. Hierbei ist zu beachten, daß die von der Schadt-Helfrich-Zelle bewirkte Drehung sich mit der Lichtrichtung umkehrt, während sie in der Drehzelle (20) unverändert bleibt. Wie vorher ist der Referenzlichtstrom (12) nach Passieren des Strahlteilers (8.2) zunächst senkrecht zur Zeichenebene polarisiert, erfährt jetzt aber eine Drehung der Polarisation von + $\pi/4$, die sich zu derjenigen der Drehzelle (20) zu insgesamt $\pi/2$ addiert und damit im Strahlteiler (8.1) absorbiert wird. Umgekehrt erzeugt die Schadt-Helfrich-Zelle jetzt eine Drehung der Polarisation von - $\pi/2$, die durch die nachfolgende Drehzelle (20) wieder rückgängig gemacht wird. Nach Modulation im Sensorelement (10) kann daher das Licht, wie in Variante 1 beschrieben, letztlich das Empfangselement (3.1) erreichen.

Während in der bisher beschriebenen Anordnung gemäß Fig.6 die Drehzelle (20) in Verbindung mit den Schadt-Helfrich-Zellen als gegeneinander geschaltete Lichtventile (Isolatoren) wirkten, vergleichbar einer elektronischen Gleichrichterschaltung, ergibt sich ein günstigerer Aufbau, wenn nur eine Drehzelle in dem gemeinsamen Strahlverlauf entweder zwischen (7.1) und (8.1) oder zwischen (7.2) und (8.2) angeordnet wird (Fig.7).

Neben dieser Drehzelle (25),die wiederum eine Drehung der Polarisationsebene um + $\pi/4$ hervorrufen soll, ist noch ein Polarisator (24) notwendig, dessen Durchlaßrichtung um $\pm \pi/4$ zur Orientierung der polarisierenden Strahlteiler (8.1) bzw. (8.2) geneigt ist. Das Vorzeichen der Neigung spielt keine Rolle. Sie wird im folgenden mit - $\pi/4$ angenommen.

In Phase 1 sind wieder Sender (1.1) und Empfänger (3.2) aktiv. Nach Passieren der Linse (7.1) fällt das Licht auf den Polarisator (24) und ist in der Ebene - $\pi/4$ polarisiert. Die nachfolgende Drehzelle (25) dreht die Polarisation senkrecht zur Zeichenebene. Das Licht wird folglich in den Strahlteilern (8.1) und (8.2) vollständig reflektiert und gelangt auf den Empfänger (3.2). Wie vorher ist die Phase 1 mit dem Referenzlichtstrom (12) verknüpft, während in Phase 2 nur der Nutzlichtstrom (13) vom Sender (1.2) auf den Empfänger (3.1) gelangen kann.

Zwar gelangen zunächst beide Lichtströme ausgehend vom Sender (1.2) auf den Strahlteiler (8.1) und werden dort vereinigt, aber der Nutzlichtstrom ist in der Zeichenebene polarisiert ($\pm\pi$), während der Referenzlichtstrom senkrecht dazu polarisiert ist ($0\pi$).

Die Drehzelle (25) sorgt wieder für eine Drehung von + $\pi/4$. Dies führt für den Nutzlichtstrom zu einer Polarisation im Winkel von -$\pi/4$, bzw. +3/4 $\pi$, so daß der nachfolgende Polarisator dieses Licht ungeändert passieren läßt.

Anders verhält es sich dagegen beim Referenzlichtstrom, der senkrecht zur Zeichenebene polarisiert ist. Hier bewirkt die Drehung in der Drehzelle (25) eine Winkeldifferenz von $\pi/2$ zum Polarisator (24), was zur Auslöschung führt.

Da die optischen Verluste für beide Anordnungen von Variante 2 gleich sind, nämlich je 50% für den Nutz- und Referenzlichtstrom, ist wegen des deutlich geringeren Bauaufwandes ("Hardware") die zweite Anordnung besonders vorteilhaft. Der Polarisator (24) kann aus einer dünnen Kunststoffolie bestehen, wie sie in der Flüssigkristall-Displaytechnik verwendet wird. Die Drehzelle (25) kann gegebenenfalls in ihrem Querschnitt dem Lichtleiter (6.1) oder einer Gradientenindexlinse (7.1) angepaßt und mit einem niedrigbrechenden Material umhüllt sein, z.B. ähnlich einer PCS-Faser (Plastic-clad-silica) oder als Wellenleiter in einem integriert-optischen Aufbau ausgebildet sein. Dem Mehraufwand für die optischen Weichen bzw. Ventile stehen daher eine einfachere Signalauswertung und der Wegfall von Maßnahmen zur Vermeidung parasitärer Reflexionen gegenüber.

Die gegenwärtig bekannten optischen Isolatoren arbeiten auf Basis des Faraday-Effekts, der eine Drehung der Polarisationsebene des Lichts bewirkt. Die Drehrichtung ist an die Orientierung des longitudinalen Magnetfelds, nicht aber an die Fortpflanzungsrichtung des Lichts gebunden. Schließt man das Volumen, das vom longitudinalen Magnetfeld durchsetzt ist, stirnseitig mit Linearpolarisatoren ab, wobei deren relative Orientierung sich nach dem durch den Faraday-Effekt hervorgerufenen Drehwinkel richtet, so kann das Licht diese Zelle in der einen Richtung ungehindert passieren, während es in umgekehrter Richtung mindestens zum Teil absorbiert wird, es sei denn, der Drehwinkel wäre exakt 90° oder $\pi/2$. Beträgt dagegen der Drehwinkel $\pi/4$, so wird der Lichtstrahl in Sperrichtung vollständig ausgelöscht. Geeignet ausgewählte und behandelte Materialien wie z.B. Granate sind wegen ihrer hohen Verdetkonstante in der Lage, die Drehung des Polarisationswinkels so zu verstärken, daß die Länge der Drehzelle auf einige Millimeter beschränkt werden kann.

Eine weitere Verkleinerung der Baugröße im Vergleich zu den im Wirkprinzip gleichen optischen Isolatoren kann erreicht werden durch eine Lichtführung im Granat durch eine bereits angesprochene Beschichtung mit einem niedrigbrechenden, transparenten Material (ähnlich einer Stufenindexfaser) oder durch die Erzeugung eines nach außen hin abfallenden Brechzahlprofils (ähnlich einer Gradientenindexfaser). Dies kann durch Druckspannungen oder gezieltes Dotieren mit Fremdatomen geschehen. Die Querschnittsverringerung des lichtführenden Materials bewirkt eine deutliche Verkleinerung der Permanentmagneten. Ferner ermöglicht die Lichtführung, die Permanentmagneten länger, dafür schmäler zu gestalten. Damit ist eine Optimierung des magnetischen Kreises möglich.

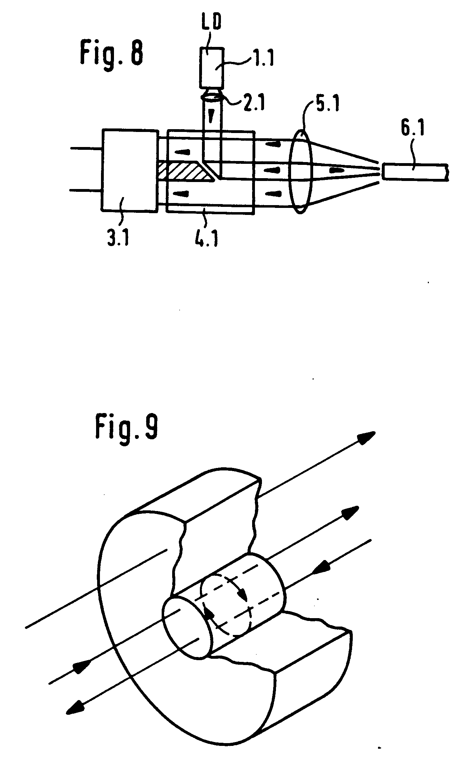

Fig. 9 zeigt beispielhaft eine Anordnung einer bekannten Drehzelle (gefertigt in den USA durch "Optics for Research").

Sende- und Empfangseinheiten (14.1, 14.2) haben als zentrales Teil die Strahlteiler (4.1 und 4.2) und können modifiziert sein. Ihre Aufgabe ist es, einerseits für die Einkopplung von Licht zu sorgen, das von den Sendern (1.1, 1.2) ausgeht, und andererseits das reflektierte und transmittierte Licht auf die Empfänger (3.1, 3.2) zu leiten.

Diese Strahlteiler sind üblicherweise mit einem Lichtverlust von jeweils 50 % behaftet. Mit verschiedenen Techniken kann dieser Verlust etwas reduziert werden, indem z.B. eine geringere Apertur oder ein höherer Polarisationsgrad des Lichtbündels ausgenutzt wird, das von den Lichtsendern ausgeht.

Statt der in den Fig. 1 bis 4 skizzierten Lichtsender (1.1, 1.2) in Gestalt von LED's (Lichtemittierende Dioden) können auch LD's (Laserdioden) verwendet werden, deren Licht sehr eng gebündelt ist und daher die Strahlteiler (4.1, 4.2) nur im zentralen Teil durchsetzen würde. Es würde daher genügen, nur diesen zentralen Teil zu verspiegeln (Fig.8), im Gegensatz zu konventionellen Strahlteilern aber mit einem Reflexionsgrad von nahezu 100 %.

Dieses Prinzip ist bereits aus auf dem Markt befindlichen Kopplern bekannt.

Das Licht der Laserdioden (LD) ist außerdem mindestens teilweise polarisiert (wie allgemein Laserlicht). Es können daher polarisierende Strahlteiler verwendet werden, wie im Zusammenhang mit der Fig. 1 als Element (8.1, 8.2) gezeigt und im Text entsprechend erläutert ist, um so die Lichtverluste zu reduzieren.

Beide Verfahren sind zweckmäßigerweise kombinierbar.

Für die Anordnung (20), welche zwei Sender und zwei Empfänger (mit Verstärkern) benutzt und die Lichtströme miteinander vergleicht, die von den Sendern ausgehen, in den faseroptischen Zuleitungen (6.1, 6.2) gedämpft, im Sensor (10) moduliert und wieder auf die Empfänger geleitet werden, ist ein Abgleich der Sender und Empfänger vorgesehen. Dies ist grundsätzlich mit externen Meßgeräten möglich. Aus der gesamten Sensoranordnung ergibt sich jedoch eine einfache Abgleichvorschrift, die überdies zur Systemüberwachung genutzt werden kann.

Ist der Sender (1.1) aktiviert, steht am Empfänger (3.1) das Signal (S11) an und am Empfänger (3.2) das Signal (S12). Analog gilt bei Aktivierung des Senders (1.2):

Signal (S21) ist dem Empfänger (3.1) und das Signal (S22) dem Empfänger (3.2) zuzuordnen.

Die Signale (S11 und S22) entsprechen dem in die jeweilige faseroptische Zuleitung bzw. Sendefaser zurückreflektierten Licht, während die Signale (S12 und S21) das jeweils transmittierte Licht kennzeichnen. Nach dem Satz der linearen Optik von der Umkehrbarkeit der Lichtwege müssen S12 und S21 einander gleich sein, wenn das Produkt aus Senderleistung und Empfängerempfindlichkeit gleich sind (Da in Variante 2 Drehzellen mit richtungsabhängiger Transmission verwendet werden, ist dort für das nachfolgend beschriebene Verfahren die Sensorfaserstrecke durch ein einfaches Faserkabel zu ersetzen).

Mit den Zuordnungen:

J1 = Sendeleistung von Sender (1.1)

J2 = Sendeleistung von Sender (1.2)

E1 = Empfängerempfindlichkeit von Empfänger (3.1)

E2 = Empfängerempfindlichkeit vom Empfänger (3.2)

folgt aus: J1 . E2 = J2 . E1, daß S21 = S12.

Da nicht anzunehmen ist, daß sich die Empfängerempfindlichkeit gleichzeitig umgekehrt proportional zur Sendeleistung ändert, kann durch Überwachung der Signalgleichheit von S21 und S12 eine abfallende Leistung oder Empfindlichkeit der entsprechenden Paarung gefunden werden.

Werden beide faseroptischen Zuleitungen (6.1, 6.2) bzw. Lichtleitfasern entfernt und durch eine Schutzkappe abgedeckt, die den Einfall von Fremdlicht verhindert, so fällt auf den Empfänger (3.1) nur das Licht:

C11 = J1 . U . E1        (Sender (1.1) aktiviert)

und auf den Empfänger (3.2):

C22 = J2 . U . E2        (Sender (1.2) aktiviert)

Hier ist angenommen, daß der Übersprechanteil (U) für beide Strahlteiler (4.1, 4.2) gleich ist. Reale Strahlteiler zeigen immer einen Übersprechanteil, auch wenn dieser teilweise bis auf 0,01 % gedrückt werden kann. Im vorliegenden Fall ist dies gar nicht erwünscht. Vielmehr wird das Übersprechen der beispielhaft gezeichneten Strahlteilerwürfel in Höhe von 1-2 % als günstig angesehen.

Ergibt sich bei abgezogenen faseroptischen Zuleitungen und aufgesteckter Schutzkappe eine Abweichung in den Signalen (C11 und C22) voneinander:

C11 + F = C22

F = Fehlersignal

während die Signale (S12 und S21) gleich sind, dann müssen paarweise die Senderleistung des Senders (1.1) und Empfindlichkeit des Empfängers (3.2) bzw. die Leistung des Senders (1.2) und die Empfindlichkeit des Empfängers (3.1) um den Faktor P korrigiert werden, daß gilt:

E1' = P . E1 und J2' = J2/P

bzw.

E2' = P . E2 und J1' = J1/P

Das Produkt aus Sendeleistung und Empfängerempfindlichkeit bleibt jeweils ungeändert:

E1 . J2 = E1' . J2' bzw. E2 . J1 = E2' . J1'

Der Korrekturfaktor P ist bestimmt durch die Formel:

$P^2$ = C22 / C11

Es kann gezeigt werden, daß nach der Korrektur gelten muß:

J1 = J2 = J und E1 = E2 = E

Bei dem Signalauswerteverfahren wird daher von einer einheitlichen Sendeleistung und Empfindlichkeit für beide Sende- und Empfangsteile (14.1, 14.2) ausgegangen.

**Patentansprüche**

1. Verfahren zur Messung einer physikalischen Größe mittels einer Anordnung mit einem faseroptischen Sensor (10) unter Zuhilfenahme eines Nutzlichtstroms (13) und eines Referenzlichtstroms (12), wobei Licht in zwei faseroptischen Sensorzuleitungen (6.1; 6.2) bidirektional geführt wird und vorgenannte Sensorzuleitungen als Sende- und Empfangsfaser betrieben werden und der Lichtstrom je nach Ausbreitungsrichtung durch Lichtweichen im Sensorelement in unterschiedliche Wege geleitet wird,
dadurch gekennzeichnet,
daß die Anordnung zwei jeweils über einen Lichtsender und einen Lichtempfänger verfügende Sende/Empfangs-Einheiten umfaßt, die über je eine faseroptische Zuleitung auf gegenüberliegenden Seiten mit der Sensoreinheit verbunden sind, und beide Zuleitungen (6.1; 6.2) jeweils vor dem Sensor (10) durch zwei Lichtweichen, welche aus optischen Elementen in Form von Lichtventilen bestehen, durch die der Lichtfluß in einer Richtung ermöglicht und in der anderen Richtung unterbrochen wird, in je eine Leitung für den Referenzlichtstrom (12) und den Nutzlichstrom (13) aufgespalten werden, so daß der Nutzlichstrom (13) jeweils durch den Sensor (10) moduliert wird, und nach dem Sensor die Leiter für den Referenz- und den Nutzlichtstrom in der jeweils gegenüberliegenden Lichtweiche wiedervereinigt werden, so daß der gesamte Lichtfluß in der einen Richtung über den Sensor (10) und in der anderen am Sensor vorbeigelenkt wird.

2. Verfahren nach Anspruch 1,
dadurch gekennzeichnet,
daß die Lichtventile im Sensor- und Referenzzweig in gegenläufiger Orientierung angeordnet werden.

3. Verfahren nach Anspruch 2,
dadurch gekennzeichnet,
daß die Lichtventile als optische Isolatoren nach dem Faraday-Effekt ausgeführt werden; die eine Drenung der Polarisation und je nach Ausbreitungsrichtung in Verbindung mit polarisierenden Elementen entweder eine angehinderte Transmission oder Auslöschung des Lichtstroms bewirken.

4. Verfahren nach einem der Ansprüche 1 bis 3,
dadurch gekennzeichnet,
daß mindestens ein Lichtventil im gemeinsamen Strahlverlauf der Lichtstromführung angeordnet wird.

5. Verfahren nach Anspruch 4,
dadurch gekennzeichnet,
daß das Lichtventil das Licht in Vorwärtsrichtung aus der lichtzuführenden Faser nur in einem Zweig passieren und das Licht in Gegenrichtung nur aus der anderen Faser in die lichtrückführende Faser eintreten läßt (Lichtweiche).

6. Verfahren nach Anspruch 5,
dadurch gekennzeichnet,
daß die Lichtweiche als optischer Isolator mit einem Drehwinkel der Polarisationsebene von $\pi/4 \pm n.\pi/2$ ausgeführt wird, wobei n = 0,1,2...

7. Verfahren nach Anspruch 6,
dadurch gekennzeichnet,
daß die Lichtstrahlen mit polarisierenden Strahlteilern getrennt werden.

8. Verfahren nach Anspruch 6,
dadurch gekennzeichnet,
daß die Lichtstrahlen durch Polarisationsprismen getrennt werden.

## Claims

1. A method for the measurement of a physical parameter based on an arrangement with a fibre-optic sensor (10) and using an effective luminous flux (13) and a reference luminous flux (12), whereby light is transmitted bi-directionally through two fibre-optic supply lines (6.1; 6.2), with said sensor supply lines acting as transmitting and receiving fibres and with the luminous flux routed along different paths in the sensor element by light switches, depending on its direction of propagation,
characterised in that
the arrangement comprises two transmitting/receiving units, each with a light transmitter and a light receiver, each of the said units being connected to the sensor unit on opposing sides through a fibre-optic supply line, with both supply lines (6.1; 6.2) split prior to reaching the sensor (10) into a line each for the reference luminous flux (12) and the effective luminous flux (13) through two light switches comprising optical elements in the form of light valves which enable transmission of light in one direction and block it in the other direction, so that the effective luminous flux (13) is modulated by the sensor (10), and after the sensor the lines for the reference luminous flux and effective luminous flux are recombined in the respective opposite light switch, so that the total luminous flux passes through the sensor (10) in one direction and bypasses the sensor in the other direction.

2. A method according to Claim 1,
characterised in that
the light valves are oriented in opposing directions in the sensor and reference branches.

3. A method according to Claim 2,
characterised in that
the light valves are oriented as optical isolators based on the Faraday effect, said optical isolators inducing a rotation of the polarization and, together with the polarizing elements, allowing either unimpeded transmission or extinguishing the luminous flux, depending on the direction of propagation.

4. A method according to any one of Claims 1 to 3,
characterised in that
at least one light valve is arranged in the common beam path of the luminous flux guide.

5. A method according to Claim 4,
characterised in that
the light valve allows the light in a forward direction from the light-supplying fibre to pass through only one branch and the light in the counter-direction only to pass from the other fibre into the light-returning fibre (light switch).

6. A method according to Claim 5,
characterised in that
the light switch is arranged as an optical isolator with an angle of rotation of the polarization plane of $\pi/4 \pm n.\pi/2$, where n = 0, 1, 2...

7. A method according to Claim 6,
characterised in that
the light beams are split through polarizing beam splitters.

8. A method according to Claim 6,
characterised in that
the light beams are split through polarizing prisms.

## Revendications

1. Procédé pour la mesure d'une grandeur physique au moyen d'un agencement avec un capteur à fibres optiques (10) à l'aide d'un flux lumineux utile (13) et d'un flux lumineux de référence (12), tandis que la lumière est guidée bi-directionnellement dans deux liaisons d'alimentation en fibres optiques (6.1, 6.2) du capteur, et que ces liaisons précitées d'alimentation du capteur sont exploitées en tant que fibres émettrices et fibres réceptrices et que le flux lumineux est guidé par des aiguillages de lumière sur des trajets différents dans l'élément capteur, selon le sens de propagation, procédé caractérisé en ce que l'agencement comprend deux unités émettrices/réceptrices disposant respectivement d'un émetteur de lumière et d'un récepteur de lumière, qui sont chacune reliées à l'unité de capteur sur des côtés opposés, par l'intermédiaire d'une liaison d'alimentation en fibres optiques, et les deux liaisons (6.1; 6.2) sont respectivement dédoublées en amont du capteur (10) en une liaison pour le flux lumineux de référence (12) et pour le flux lumineux utile (13), par deux aiguillages de lumière qui sont constitués par des éléments optiques sous la forme de soupapes de lumière à travers lesquelles le flux lumineux est rendu possible dans un sens et interrompu dans l'autre sens, de sorte que le flux lumineux utile (13) est respectivement modulé par le capteur (10), et qu'après le capteur les liaisons pour le flux lumineux de référence et le flux lumineux utile, sont à nouveau réunies dans l'aiguillage de lumière opposé, de sorte que le flux lumineux total passe dans un sens par l'intermédiaire du capteur (10) et dans l'autre sens à côté du capteur.

2. Procédé selon la revendication 1, caractérisé en ce que les soupapes de lumière sur le rameau du capteur et sur le rameau de référence, sont disposées selon une orientation opposée.

3. Procédé selon la revendication 2, caractérisé en ce que les soupapes de lumière sont réalisées sous la forme d'isolateurs optiques selon l'effet Faraday qui provoquent une rotation de la polarisation et selon le sens de propagation, en combinaison avec des éléments polarisants, soit une transmission sans empêchement, soit une extinction du flux lumineux.

4. Procédé selon une des revendications 1 à 3, caractérisé en ce qu'au moins une soupape de lumière est disposée sur le trajet commun du faisceau du guidage du flux lumineux.

5. Procédé selon la revendication 4, caractérisé en ce que la soupape de lumière ne laisse passer que dans un rameau, la lumière sortant vers l'avant de la fibre amenant la lumière, et ne laisse entrer dans la fibre ramenant la lumière, que la lumière en sens opposé provenant de l'autre fibre (aiguillage de lumière).

6. Procédé selon la revendication 5, caractérisé en ce que l'aiguillage de lumière est réalisé sous la forme d'un isolateur optique avec un angle de rotation du plan de polarisation de $\pi/4 \pm n \cdot \pi/2$, tandis que n = 0, 1, 2 ...

7. Procédé selon la revendication 6, caractérisé en ce que les faisceaux lumineux sont séparés par des diviseurs de faisceaux polarisants.

8. Procédé selon la revendication 6, caractérisé en ce que les faisceaux lumineux sont séparés par des prismes de polarisation.

Fig.1a

Fig.1b

Fig.1c

Fig.1d

## Fig.2

## Fig.3

## Fig.4

Fig. 5

Fig. 6

Fig. 7

Fig. 8

Fig. 9